# EUROPEAN PATENT APPLICATION

(11) **EP 2 012 265 A1**
(43) Date of publication of application: **07.01.2009**
(21) Application number: 08150507.5
(22) Date of filing: 22.01.2008
(51) Int. Cl.: G06Q 10/00, H04L 12/58

(54) **Issue or Transaction Tracking by Using Presence Information and Instant Messaging**

(30) Priority: 22.05.2007 US 805019
(71) Applicant: AVAYA TECHNOLOGY LLC, Basking Ridge, NJ 07920 (US)
(72) Inventor: STEINER, Robert C, Broomfield County, CO 80020 (US)
(74) Representative: Williams, David John

(57) **Abstract**

A presentity is used to represent and report states of an issue or a transaction. The issue or the transaction is an intangible (an incorporeal, non-physical) entity. The presentity for the issue or the transaction is created, a state of the issue or the transaction received from a handler of the issue or the transaction is registered in the presentity, and the registered state is reported to watchers of the presentity. Preferably, a handler registers with the presentity as a proxy for the issue or the transaction, and messages sent to the presentity are forwarded to the handler who is the registered proxy. If the issue or the transaction comprises a plurality of entities, preferably a separate presentity for each one of the entities, as well as for the issue or the transaction as a whole, is created and used.

## Description

### Technical Field

This invention relates to the use of presence information.

### Background of the Invention

Presence information is a status indicator that is normally used to convey ability and willingness of a communication partner to communicate. A client provides presence information, called "presence state", to a presence service, where the presence state is stored in a record of the client's availability, called a "presentity". From there, the presence state is made available to users, called "watchers", who have subscribed with the presence service to receive the client's presence state.

Presence information is one of the drivers of instant messaging (IM), which is a form of real-time text communication between parties over a network. A client publishes its presence state to indicate its communication status, such as "free," "busy," "away," "do not disturb," etc. This published state informs watchers who wish to contact the client of his or her availability and willingness to communicate. The status is used to display an indicator icon on a watcher's instant messaging interface that indicates to the watcher the present availability of the client to engage in an IM session.

Presence information is currently used to track communications status of tangible, physical entities, namely persons. To the inventor's knowledge, presence information has not been used to track status - communications or otherwise - of intangible entities, such as progress of issues to resolution or the progress of transactions to completion.

An illustrative example of a transaction is fulfillment of an order for goods or a service. To find the status of an order, conventionally a customer would either go to a website or call a call center, enter the order number, and in response get the order status. In tracking delivery of the order, the customer would visit the website of the delivery service and use a tracking number to get the current delivery status. The customer has to initiate the contact for each inquiry.

An alternative methodology for tracking fulfillment of an order enables the customer to register with the supplier and the shipper to receive order and shipping status by email. One registration is required to track the order status, and a separate registration is required to track the shipping status. Tracking status by email requires the customer to have an email application running, and to periodically check the email and filter out order- and status-tracking messages from the other email messages in the customer's mailbox. This again requires the customer's active manual involvement in obtaining order and shipping status. It also makes email notification less desirable for customers who use small hand-held devices, like cell phones, to receive their email.

### Summary of the Invention

This invention is directed to solving these and other problems and disadvantages of the prior art. Generally, according to the invention, a presentity is used to represent and report states of an issue or a transaction. The issue or the transaction is an intangible (an incorporeal, non-physical) entity. The presentity for the issue or the transaction is created, a state of the issue or the transaction received from a handler of the issue or the transactions is registered in the presentity, and the registered state is reported to watchers of the presentity. The presence state is thus pushed to the customer, instead of having to be pulled by the customer. A presence service reports presence state to watchers via instant messages, so the customer is informed of the changed state immediately and without having to take any action to obtain the changed state. Preferably, a handler registers with the presentity as a proxy for the issue or the transaction, and messages sent to the presentity are forwarded to the handler who is the registered proxy. If the issue or the transaction comprises a plurality of entities, preferably a separate presentity for each one of the entities, as well as for the issue or the transaction as a whole, is created and used.

The invention may be implemented as a method, an apparatus for performing the method, or a computer-readable medium containing instructions which, when executed by a computer, cause the computer to perform the method.

### Brief Description of the Drawing

These and other features and advantages of the invention will become more apparent from considering the following description of an illustrative embodiment of the invention together with the drawing, in which:
Fig. 1 is a block diagram of a communications system that includes an illustrative embodiment of the invention;
Figs. 2-4 are functional flow diagrams of a first illustrative embodiment of the invention in the system of Fig. 1; and
Fig. 5 is a functional flow diagram of a second illustrative embodiment of the invention in the system of Fig. 1

### Detailed Description

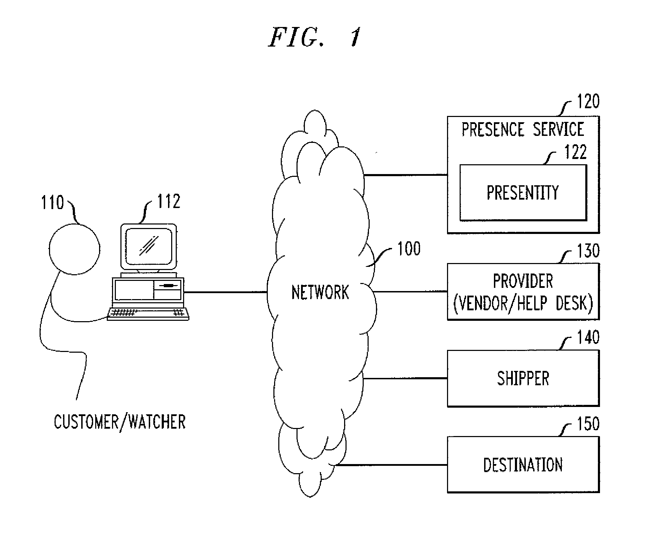

Fig. 1 shows a communications network that interconnects a communications device **112** of a customer **110** (hereinafter referred to jointly and severally as customer **110)** with a provider of a presence service **120,** a provider **130** of goods or services (such as a vendor of goods or a help desk, for example), a shipper **140** of the goods, and a delivery destination **150** of the goods.

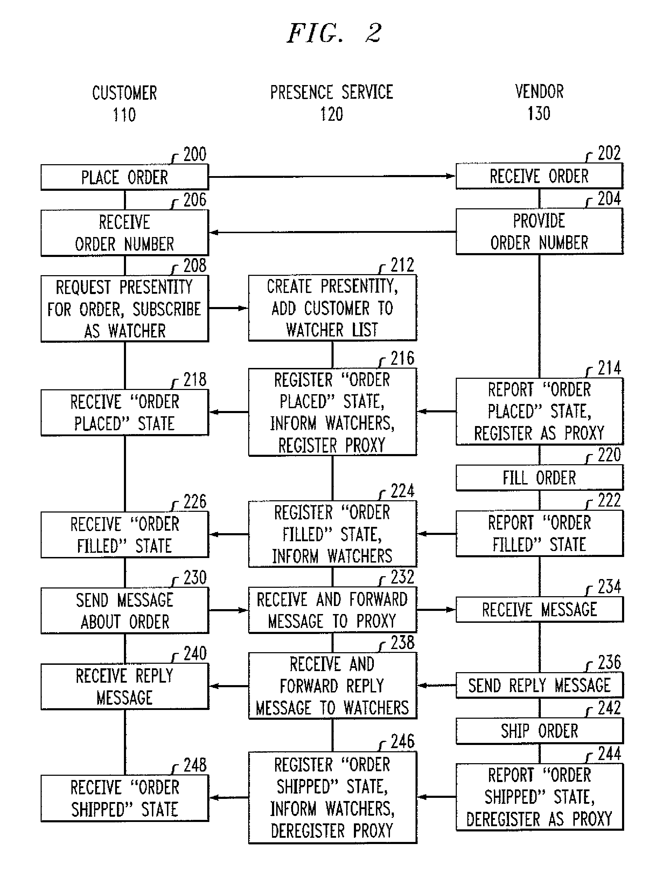

Fig. 1 serves as a context for one illustrative embodiment of the invention -- order tracking. The order-tracking process is illustrated in Figs. 2-4. For purposes of this embodiment, provider **130** is a vendor **130**.

Customer **110** places an order for goods with vendor **130,** at step **200** of Fig. 2, illustratively by calling a call center of vendor **130** or by filling out and submitting a web order page on the vendor's website. Vendor **130** receives the order, at step **202,** and in response provides an order number to customer **110,** at step **204.** Assuming that customer **110** is a client of presence service **120**, upon receiving the order number, at step **206**, customer **120** registers the order with the presence service 120: customer **120** contacts presence service **120**, gives it the order number, and requests it to create a presentity for the order, at step **208.** Customer **110** also subscribes as a watcher to the presentity's presence, at step **208.** Alternatively, if vendor **130** is a client of presence service **120,** vendor **130** may perform step **208** on behalf of customer **110** based on an agreement with the customer **110.** In response, presence service **120** creates a presentity **122** for the order in a conventional manner, and assigns the order number as an identifier to presentity **122,** at step **212.** To the vendor, the presentity represents the customer; to the customer, the presentity represents both the order and the vendor.

Having received the order at step **202**, vendor **130** reports an "order placed" status for the order to presence service **120** in a conventional manner, and also requests presence service **120** to register vendor **130** as a proxy for the order, at step **214.** Becoming registered as a proxy enables vendor **130** to receive messages about the order from customer **110** through presence service **120**. Presence service **120** records the reported state in presentity **122** and also associates vendor **130** with presentity **122** as a proxy, at step **216**. Recording of the state results in all recorded watchers of presentity **122,** including customer **110,** being sent an instant message notifying them of the state, in a conventional manner, at step **216.** Customer **110** receives the instant message from presence service **120** at step **218**.

The order may represent multiple items, and vendor **130** may or may not be able to fill the entire order all at once. If it cannot, a separate presentity **122** is created for each item of the original order. Thus, an order represents a group of entities that may have a plurality of states (multiple presences) simultaneously, one for each entity. There may be a higher-level presentity representing the order as a whole and subsuming the states of the presentities of the individual entities, whose state or "rich presence" indicates the overall state of the group, e.g., whether all items of the order have been shipped and whether all of the items have been delivered.

When vendor **130** has filled the order or a piece of it, at step **220,** vendor **130** notifies presence service **120** of this change of state, at step **222.** This may be done automatically: for example, the box in which the ordered goods have been packed may have an embedded RFID, and that RFID is automatically read by an RFID reader as the box is conveyed from the warehouse to the shipping dock. Presence service **120** records the new state in presentity **122** and notifies watchers including customer **110** of the new state via instant messages, at step **224.** Customer **110** receives the instant message notifying it of the new state, at step **226**.

If, at any time while vendor **130** is registered with presence service **120** as a proxy for the order, customer **110** sends an instant message to presence service **120** addressed to the order number, at step **230**, presence service **120** receives the message, uses the order number to associate the message with presentity **122**, determines from presentity **122** that vendor **130** is a proxy for the order, and forwards the message on to vendor **130**, at step **232**. Vendor **130** receives the message, at step **234,** and sends an instant message reply to presence service **120**, at step **236**. Presence service **120** treats the reply essentially as a change of state and forwards it to all watchers of presentity **122**, including customer **110,** at step **238**. Customer **110** receives the instant message reply, at step **240**. Vendor **130** may likewise initiate communications to customer **110** and receive replies thereto via this mechanism.

When vendor **130** ships the order, at step **242**, it notifies presence service **120** of this change of state and also requests presence service **120** to deregister vendor **130** as a proxy for the order, at step **244**. Presence service **120** stores and reports the new state to watchers of presentity **122,** including customer **110,** via an instant message and deregisters vendor **130** as a proxy, at step **246**. Customer **110** receives the instant message informing it of the new state, at step **248**.

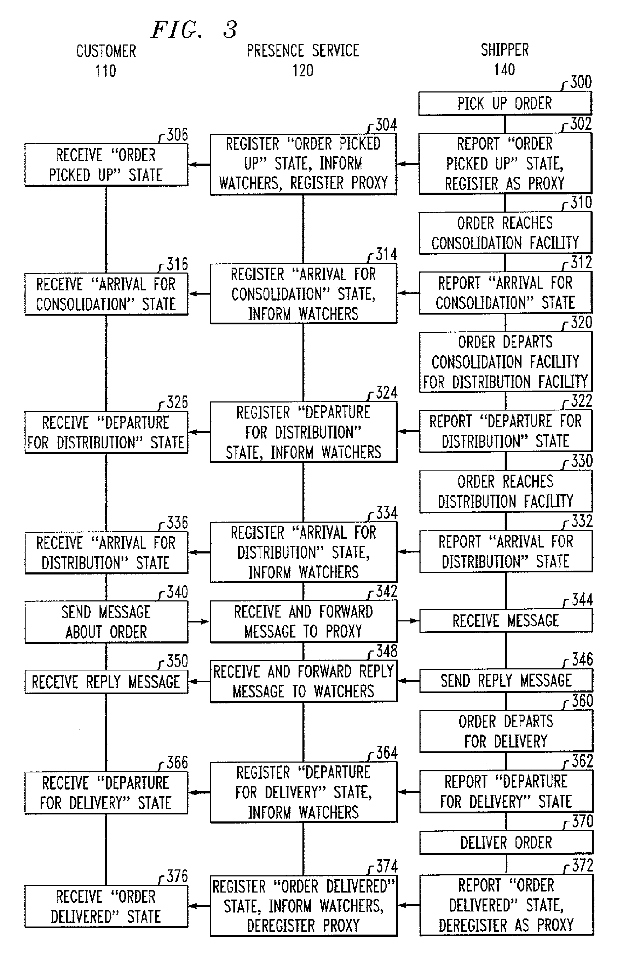

When shipper **140** picks up the order from vendor **130,** at step **300** of Fig. 3, it reports this new state to presence service **120** and also requests presence service **120** to register shipper **140** as the new proxy for the order, at step **302**. This may again be done automatically via the RFID and an RFID reader in the truck of shipper **140.** Presence service **120** records the new state in presentity **122,** records shipper **140** as the proxy with presentity **122** and notifies watchers of presentity **122** of the new state, at step **304**. Customer **110** receives the instant message notification of the new state at step **306**.

When the order arrives at a consolidation facility of shipper **140**, at step **310**, shipper **140** notifies presence service **120**, at step **312**. Presence service **120** records the new state in presentity **122** and notifies watchers of presentity **122**, at step **314**. Customer **110** receives an instant message notifying it of the new state, at step **316**.

When the order leaves the consolidation facility of shipper **140** for a distribution facility of shipper **140**, at step **320**, shipper **140** notifies presence service **120,** at step **322.** Presence service **120** records the new state in presentity **122** and notifies watchers of presentity **122,** at step **324**. Customer **110** receives an instant message notifying it of the new state, at step **326.**

When the order arrives at the distribution facility of shipper **140**, at step **330**, shipper **140** notifies presence service **120**, at step **332**. Presence service **120** records the new state in presentity **122** and notifies watchers of presentity **122,** at step **334**. Customer **110** receives an instant message notifying it of the new state, at step **336**.

If, at any time while shipper **140** is registered with the presence service **120** as a proxy for the order, customer **110** sends an instant message to presence service **120** addressed to the order number, at step **340,** presence service **120** forwards the message to shipper **140,** at step **342**. Shipper **140** receives the message, at step **344,** and sends an instant message reply to presence service **120,** at step **346.** Presence service **120** relays the message to watchers of presentity **122,** at step **348,** and customer **110** receives the instant message, at step **350**. Shipper **140** may likewise initiate communications to customer **110** and receive replies thereto via this mechanism.

When the order leaves distribution facility of shipper **140** for delivery to customer **110,** at step **360,** shipper **140** notifies presence service **120**, at step **362.** Presence service **120** records the new state in presentity **122** and notifies watchers of presentity **122**, at step **364.** Customer **110** receives an instant message notifying it of the new state, at step 366.

When shipper **140** delivers the order to its destination point **150,** at step **370**, shipper **140** notifies presence service **120** and also requests presence service **120** to deregister shipper **140** as a proxy for the order, at step **372.** Presence service **120** records the new state in presentity **122** and notifies watchers of presentity **122** of the new state, at step 374. Presence service **120** also deregisters shipper **140** as a proxy, at step **374**. Customer **110** receives an instant message notifying it of the new state, at step **376.**

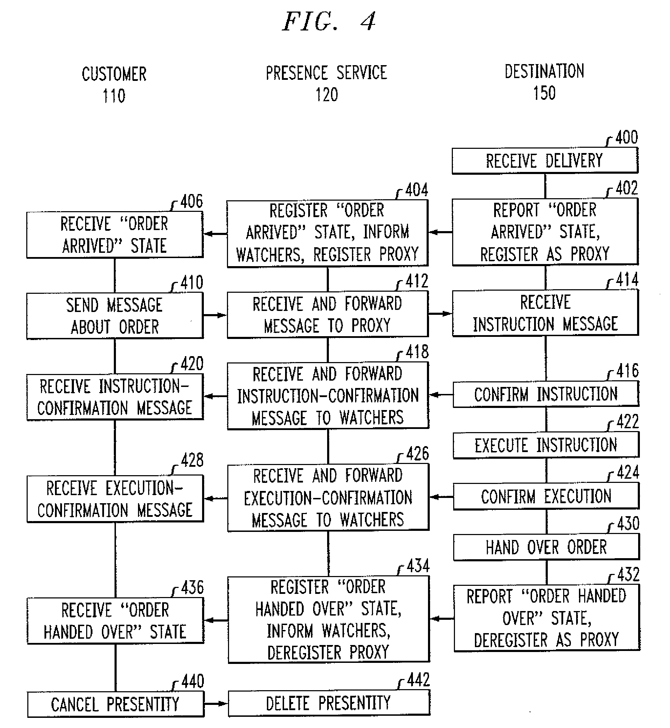

The delivery of the order to its destination point **150** may not have resulted in delivery of the order into the hands of customer **110.** For example, the order may have been delivered to the shipping and receiving dock of the employer of customer **110.** When such a delivery to a third party is effected and the third-party destination point **150** receives the order, at step **400** of Fig. 4, destination point **150** reports this new state to presence service **120** and also requests presence service **120** to register destination point **150** as the new proxy for the order, at step **402.** Presence service **120** records the new state in presentity **122,** records destination point **150** as the new proxy with presentity **122,** and notifies watchers of presentity **122** of the new state, at step **404.** Customer **110** receives the notification at step **406.**

If, at any time while destination point **150** is registered with presence service **120** as a proxy for the order, customer **110** sends an instant message to presence service **120** addressed to the order number, at step **410,** presence service **120** forwards the message to destination point **150,** at step **412.** For example, if destination point **150** is the customer's employer, customer **110** may request destination point **150** to forward the order to the customer's home. Destination point **150** receives the request, at step **414,** and confirms the request, at step **416.** Presence service **120** records and forwards the confirmation to customer **110,** at step **418,** and customer **110** receives it, at step **420.**

When destination point **150** has executed the customer's request, at step **422,** it confirms the execution, at step **424.** Presence service **120** records and forwards the confirmation to customer **110,** at step **426,** and customer **110** receives, it at step **428.** If the request was to forward the order to the customer's home, the process of Fig. 3 may be repeated with the shipper who ships the order from destination point **150** to the customer's home.

Eventually, the order finds its way into the customer's hands. Let us assume that customer **110** picked up the order at his or her employer's loading dock, or better yet, that the destination point **150** is the customer's home. When the order is handed over to customer **110,** at step **430,** and customer **110** receives it, at step **432,** destination point **150** reports this new state to presence service **120** and also requests presence service **120** to deregister destination point **150** as a proxy for the order, at step **432.** Presence service **120** records the new state in presentity **122** and notifies watchers of presentity **122** of the new state, at step **434.** Presence service **120** also deregisters destination point **150** as a proxy, at step **434.** Customer **110** receives an instant message notifying it of the new state, at step **436.**

Delivery of the order having been completed, there is no more need for presentity **122.** Customer **110** therefore requests presence service **120** to cancel presentity **122,** at step **440,** and presence service **120** deletes presentity **122,** at step **442.** Alternatively, if vendor **130** was also a watcher of presentity **122,** when vendor **130** determines that delivery of the order has been completed, vendor **130** may perform step **440** on behalf of customer **110.**

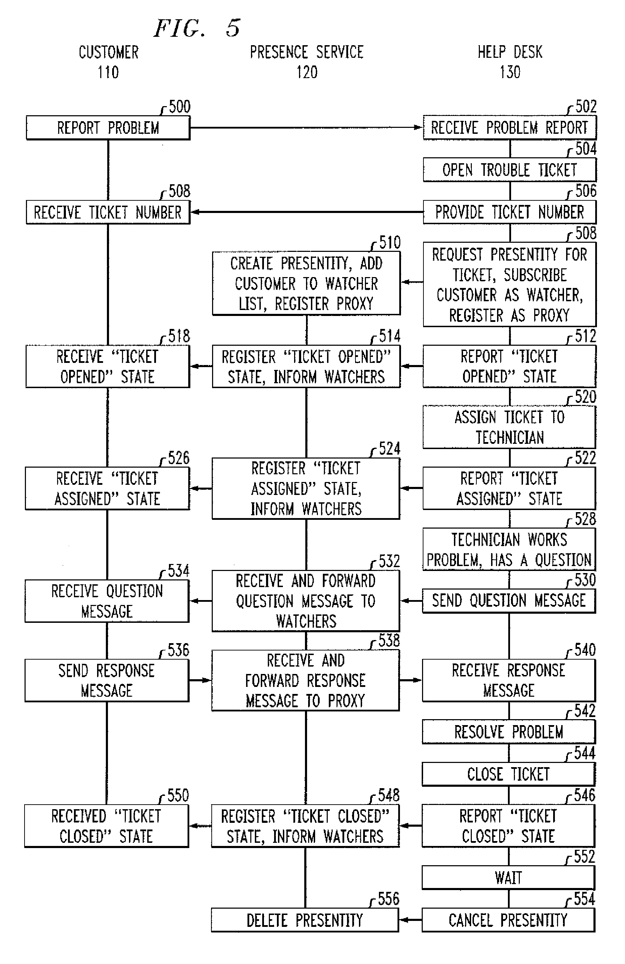

Fig. 5 shows a second embodiment of the invention where the invention is applied to an issue in a help desk setting. For purposes of this embodiment, provider **130** is a help desk **130** of Fig. 1.

When customer **110** encounters a problem with his or her computer **112,** customer **110** reports the problem to help desk **130,** at step **500,** in a conventional manner, such as by calling help desk 130 or filling out a form on a website of help desk **130.** Help desk **130** receives the problem report, at step **502,** opens a trouble ticket for the problem, at step **504,** and provides the ticket number to customer **110,** at step **506,** all in a conventional manner. Customer **110** receives the ticket number at step **508.** Assuming that help desk **130** is a client of presence service **120,** help desk **130** contacts presence service **120** and requests it to create a presentity **122** with customer **110** as a watcher, under the ticket number as its identifier, at step **508.** Help desk **130** also requests presence service **120** to register help desk **130** as a proxy with presentity **122,** at step **508.** Presence service **120** creates presentity **122** and registers help desk **130** as a proxy, at step **510.** Help desk **130** then reports the "ticket opened" state to presence service **120,** at step **512.** Presence service **120** registers the state in presentity **122** and notifies watchers thereof, at step **514.** Customer **110** receives an IM message notifying it of the "ticket opened" state, at step **518.**

When help desk **130** assigns the trouble ticket to a technician, at step **520,** it reports this new state to presence service **120,** at step **522.** Presence service **120** registers the new state in presentity **122** and informs the watchers of presentity **122 --** customer **110,** in this instance,at step **524.** Customer **110** receives the new state, at step **526.**

As the technician works the problem, assume that he or he has a question, at step **528.** The technician sends an instant message with the question addressed to the ticket number, to presence service **120,** at step **530.** Presence service **120** matches the ticket number to presentity **122** and forwards the message to watchers of presentity **122 --** customer **110,** in this instance, -- at step **532.** Customer **110** receives the message, at step **534,** and sends a reply thereto to presence service **120,** at step **536.** Presence service **120** forwards the reply to the proxy, which is help desk **130,** at step **538.** The technician receives the reply, at step **540,** resolves the problem, at step **542,** and closes the ticket, at step **534.** Help desk **120** reports the "ticket closed" state to presence service **120,** at step **546,** and presence service **120** informs watchers of presentity **122** -- customer **110,** in this instance, -- of the new state, at step **548.** Customer **110** receives the new state, at step **550.**

Help desk **130** keeps presentity **122** in existence for some period of time, at step **552,** to give customer **110** a chance to communicate to help desk **130** any other issues concerning the problem and its resolution. When that time expires, help desk **130** contacts presence service **120** and cancels presentity **122,** at step **554.** In response, presence service **120** deletes presentity **122,** at step **556.**

Of course, various changes and modifications to the illustrative embodiment described above will be apparent to those skilled in the art. For example, the invention may be used to automatically provide delivery performance and customer satisfaction information, services akin to registered mail, quality of service measurements and reporting, etc. The customer may be given more flexibility, such as to change their mind about an order during the delivery process, to switch their instant messaging between devices as their presence changes, etc. Or the invention, along with sensory such as RFIDs, may be used to track pets, children, documents, etc. These changes and modifications can be made without departing from the spirit and the scope of the invention and without diminishing its attendant advantages. It is therefore intended that such changes and modifications be covered by the following claims except insofar as limited by the prior art.

## Claims

1. A method comprising:
creating a presentity for an issue or a transaction;
receiving a state of the issue or the transaction from a handler of the issue or the transaction;
registering the state in the presentity; and
reporting the registered state to watchers of the presentity.

2. The method of claim 1 wherein:
the issue or the transaction is an intangible entity.

3. The method of claim 1 wherein:
the issue or the transaction comprises a plurality of entities; creating comprises
creating a separate presentity for each one of the entities, and
creating a separate presentity for the issue or the transaction as a whole;
receiving comprises
receiving a state of one of the entities;
registering comprises
registering the state of the one entity in the presentity of the one entity,
determining a state of the issue or the transaction as the whole, and
registering the state of the issue or the transaction as a whole in the presentity of the issue or the transaction as the whole;
reporting comprises
reporting the state of the entity to the watchers of the presentity of the entity, and
reporting the state of the issue or the transaction as the whole to the watchers of the presentity of the issue or the transaction as a whole.

4. The method of claim 1 further comprising:
registering the handler with the presentity as a proxy for the issue or the transaction;
sending a message to the presentity;
determining the registered proxy from the presentity; and
forwarding the message to the handler that is the registered proxy.

5. The method of claim 4 further comprising:
the handler handing off the issue or the transaction to a second handler;
deregistering initial said handler as the proxy from the presentity; and
registering the second handler as the proxy for the issue or the transaction with the presentity.

6. A computer-readable storage medium containing instructions which, when executed by a computer, cause the computer to perform the method of one of claims 1-5.

7. An apparatus comprising:
a presence service adapted to create a presentity for an issue or a transaction, receive a state of the issue or the transaction from a handler of the issue or the transaction, register the state in the presentity, and report the registered state to watchers of the presentity.

8. The apparatus of claim 7 wherein:
the issue or the transaction is an intangible entity.

9. The apparatus of claim 7 wherein:
the issue or the transaction comprises a plurality of entities; and
the presence service is adapted to create a separate presentity for each one of the entities, create a separate presentity for the issue or the transaction as a whole, receive a state of one of the entities, register the state of the one entity in the presentity of the one entity, determine a state of the issue or the transaction as the whole, register the state of the issue or the transaction as a whole in the presentity of the issue or the transaction as the whole, report the state of the entity to the watchers of the presentity of the entity, and report the state of the issue or the transaction as the whole to the watchers of the presentity of the issue or the transaction as a whole.

10. The apparatus of claim 7 wherein:
the presence service is further adapted to register the handler with the presentity as a proxy for the issue or the transaction, and to respond to receipt of a message to the presentity by determining the registered proxy from the presentity and forwarding the message to the handler that is the registered proxy.

11. The apparatus of claim 10 wherein:
the presence service is further adapted to deregister the handler as the proxy from the presentity, and register a second handler, to whom initial said handler has handed off the issue or the transaction, as the proxy for the issue or the transaction with the presentity.
